# EUROPÄISCHE PATENTSCHRIFT

(11) **EP 1 077 832 B1**
(45) Veröffentlichungstag und Bekanntmachung des Hinweises auf die Patenterteilung: **14.08.2002**
(21) Anmeldenummer: 99936302.1
(22) Anmeldetag: 18.05.1999
(51) Int. Cl.: B60N 2/48

(54) **FAHRZEUGSITZ MIT EINER DURCH DIE GRÖSSE DES BENUTZERS BEEINFLUSSTEN SENSORIK GEFÜHRTEN KOPFSTÜTZE**
ADJUSTABLE VEHICLE SEAT WITH HORIZONTAL SEAT ADJUSTMENT AND/OR SEAT HEIGHT ADJUSTMENT AND/OR SEAT DEPTH ADJUSTMENT AND NECK-REST THAT CAN BE DISPLACED BY AN ELECTRIC MOTOR AND GUIDED BY A SENSOR SYSTEM INFLUENCED BY THE SIZE OF THE USER
SIEGE AUTOMOBILE REGLABLE COMPORTANT UN REGLAGE DE LA HAUTEUR ET/OU DE L'AVANCE DU SIEGE ET/OU DE LA HAUTEUR DU COUSSIN DE SIEGE, ET EQUIPE D'UN REPOSE-TETE POUVANT ETRE DEPLACE PAR UN MOTEUR ELECTRIQUE ET GUIDE AU MOYEN D'UN SYSTEME DE DETECTION INFLUENCE PAR LA TAILLE DE L'UTILISATEUR

(30) Priorität: 20.05.1998 DE 19823661
(43) Veröffentlichungstag der Anmeldung: 28.02.2001
(73) Patentinhaber: Brose Fahrzeugteile GmbH & Co. KG Coburg, 96450 Coburg (DE)
(72) Erfinder: HAMPEL, Klaus, D-96450 Coburg (DE); KLIESE, Anja, D-96450 Coburg (DE); JÜRJENS, Gerhard, D-96450 Coburg (DE); KAESLING, Heinz, D-96271 Grub am Forst (DE)
(74) Vertreter: Baumgärtel, Gunnar, Dr.
(86) Internationale Anmeldenummer: DE9901526
(87) Internationale Veröffentlichungsnummer: WO9959835

(56) Entgegenhaltungen:
- DE-A- 3 136 648
- DE-A- 3 240 294
- DE-A- 3 730 210
- DE-A- 4 325 996
- DE-A- 19 522 897
- DE-C- 4 228 849
- DE-C- 19 651 670
- US-A- 4 645 233
- US-A- 5 222 784
- US-A- 5 848 661

## Beschreibung

Die Erfindung betrifft einen einstellbaren Fahrzeugsitz mit einer Sitzlängsverstellung und/oder einer Sitzhöhenverstellung und/oder Sitzkissentiefenverstellung sowie mit einer von einer durch die Größe des Benutzers beeinflußten Sensorik geführten elektromotorisch verfahrbaren Kopfstütze nach dem Oberbegriff des Patentanspruchs 1.

Aus der DE 43 25 996 A1 ist eine Verstellvorrichtung für eine motorisch einstellbare Kopfstütze eines Kraftfahrzeuges bekannt, bei der die an Führungsstangen befestigte und in Führungshülsen geführte Kopfstütze über ein Verstellgetriebe mit einem Motor gekoppelt ist. Sämtliche Teile der Verstellvorrichtung sind dabei in dem oberen Bereich des Sitzlehnenkörpers zwischen den Führungsstangen angeordnet.

Eine Verstellung einer solchen Kopfstütze erfolgt dabei entweder durch manuelle Bedienung von Schaltern oder mittels einer Memory-Funktion.

Aus der DE 195 22 897 A1 ist ein einstellbarer Fahrzeugsitz mit mehreren motorisch angetriebenen Verstelleinrichtungen bekannt, bei der in Abhängigkeit von der Verstellung einer Verstelleinrichtung die übrigen Sitzverstelleinrichtungen von einem Steuergerät automatisch entsprechend abgespeicherter Kennlinien verfahren werden.

Es ist eine häufig zu beobachtende Tatsache, daß der Einstellung der Kopfstützen kaum Beachtung geschenkt wird, wodurch sich das Verletzungsrisiko erheblich erhöht. Die richtige Position der Kopfstütze ist jedoch insbesondere bei Auffahrunfällen von entscheidender Bedeutung und kann schwerwiegende Verletzungen verhindern.

Andererseits kann die bezüglich der Sicherheitsanforderungen optimal eingestellte Position der Kopfstütze in bestimmten Situationen hinderlich sein, beispielsweise beim Rückwärtsfahren oder wenn eine Sitzlehne oder ein Sitz zu Zwecken des Einstiegs umgeklappt wird. In diesen Fällen muß eine manuelle Verstellung bzw. eine Betätigung eines Schalters erfolgen.

Eine automatische Einstellung von Verstellelementen eines Fahrzeugsitzes, darunter auch die der Kopfstütze, über die Memory-Funktion ist bisher eine teuere Ausstattungsvariante. Ein solcher Memory-Sitz speichert die Positionen den vorhandenen Verstellelemente und fährt sie bei Bedarf an. Auf diese Weise ist es möglich, eine optimale Einstellung der Kopfstütze bereitzustellen. Nachteilig an einem solchen Sitz ist das relativ hohe Gewicht aufgrund der Vielzahl der einstellbaren Verstellelemente sowie die hohen Kosten, so daß diese Lösung bisher nur bei höherpreisigen Fahrzeugmodellen Anwendung findet. Weiterhin werden die zu speichernden Positionen von dem Fahrzeugnutzer eingestellt, so daß es zu Fehlern bezüglich der Kopfstützeneinstellung bereits beim Speichern der Positionen kommen kann.

Aus der DE 32 40 291 A 1 ist eine Vorrichtung zur Höheneinstellung einer Kopfstütze bekannt, die einen elektrischen Verstellantrieb zur Einstellung der Position der Kopfstütze aufweist. Um die Kopfstütze in eine dem Sitzbenutzer angepaßte Position zu bewegen, ist an der Kopfstütze eine mit einer Schalteinrichtung zusammenwirkende Meßeinrichtung angeordnet, die die Höhe des Sitzbenutzers an einer bestimmten Körperstelle, wie z.B. einer Begrenzungslinie der Schulter oder des Kopfes, als einen Wert ermittelt, der dem Verstellantrieb zugeführt wird, um die Einstellung der Position der Kopfstütze zu steuern.

Aus der Erkenntnis, daß die korrekte Einstellung der Kopfstütze eine sicherheitswesentliche Funktion im Kraftfahrzeug ausübt, besteht die Aufgabe der vorliegenden Erfindung darin, einen preiswerten und vom Ausstattungsniveau des Fahrzeuges unabhängigen Fahrzeugsitz bereitzustellen, bei dem die Kopfstütze in Abhängigkeit von sensierten, die Körpergröße berücksichtigenden Parametern automatisch verfahren wird.

Diese Aufgabe wird durch einen Fahrzeugsitz mit den Merkmalen des Patentanspruchs 1 gelöst.

Durch die sitzbezogene Elektronikeinheit können noch nicht oder erst teilweise mit verstellbaren Komponenten ausgerüstete Fahrzeugsitze mit einer Kopfstützenverstellung aus- bzw. nachgerüstet werden, ohne daß das Fahrzeug bereits eine entsprechende vorinstallierte Elektronik aufweisen muß.

Vorteilhafterweise ist die Elektronikeinheit zur Steuerung sämtlicher zu steuernder Sitzverstelleinrichtungen vorgesehen, d.h., daß der Sitz keine weitere Elektronikeinheit aufweist. Durch die zentrale Steuerung der Sitzverstelleinrichtungen verringert sich der apparative und montagebedingte Aufwand.

In einer vorteilhaften Ausgestaltung der Erfindung ist die Elektronikeinheit für eine maximal vorgesehene Anzahl von Funktionen des Sitzes ausgerüstet und nach ihrem Anschluß an die entsprechenden Verstelleinrichtungen werden die zugeordneten Funktionen aktiviert. Nach diesem sogenannten plug-and-play-Prinzip erkennt die Elektronik die angeschlossenen Verstelleinrichtungen, beispielsweise die elektrischen Sitzlängsverstellung und aktiviert daraufhin die entsprechenden Programme. Sind in der jeweiligen Fahrzeugausstattung andere Varianten der Verstelleinrichtungen vorgesehen, beispielsweise eine elektrische Sitzhöhenverstellung, wird ein entsprechend anderes Programm gestartet.

Es ist günstig, wenn die Sensorik Bestandteil einer elektromotorisch verstellbaren Sitzverstelleinrichtung ist, da auf diese Weise direkt Informationen über die Verstellung gewonnen werden können. Es ist jedoch auch denkbar, daß die Sensorik Bestandteil einer manuell verstellbaren Sitzverstelleinrichtung ist, also beispielsweise auf optischem Wege die Sitzposition ermittelt und an die Elektronikeinheit übermittelt. Ebenso ist die Sensierung über ein Drehpotentiometer an einer Verstelleinrichtung möglich.

Vorteilhafterweise ist die Kopfstütze in Abhängigkeit von mehreren führenden Verstelleinrichtungen verstellbar, da auf diese Art eine Redundanz bzw. eine erhöhte Genauigkeit bei der korrekten Einstellung der Kopfstützenhöhe in Bezug auf den Sitznutzer ermöglicht wird. Aus der Kombination zweier oder mehrerer Einstellungen des Sitzes lassen sich genauere Rückschlüsse über die optimale Kopfstützenposition ziehen.

In einer Variante der Erfindung ist die Elektronikeinheit dergestalt programmiert, daß eine Verstellung der Kopfstütze in Abhängigkeit von Sitzverstelleinrichtungen, insbesondere der Sitzlängseinstellung LV erfolgt. Da in der Regel eine direkte Abhängigkeit von der Beinlänge zu der Rumpflänge besteht, kann davon ausgegangen werden, daß bei einer Position des Sitzes in der Nähe des Lenkrades eine niedrige Kopfstützenhöhe einzustellen ist. Dementsprechend erfolgt eine Verstellung der Kopfstütze in eine obere Position, wenn der Sitz von dem Lenkrad entfernt eingestellt ist. Alternativ oder in Kombination dazu ist als führende Verstelleinrichtung die Sitzhöhenverstellung HV vorgesehen, wobei hier in der Regel die Kopfstütze um so weiter ausgefahren wird, je weiter der Sitz nach unten verstellt wird.

In einer anderen vorteilhaften Ausgestaltung der Erfindung sind als führende Verstelleinrichtungen die Spiegelverstellung SP und/oder die Gurtpunkt-Höhenverstellung und/oder die Lenkradverstellung oder ein die Lage des Kopfes erkennenden Sensor vorgesehen.

Eine Weiterbildung der Erfindung besteht darin, daß in der Elektronikeinheit unterschiedliche Verstellgeschwindigkeiten der Kopfstütze abgelegt sind. So kann bei einer notwendigen schnellen Verstellung, beispielsweise bei dem Vorklappen der Sitzlehne oder des Sitzes, die entsprechende Position in kurzer Zeit erfolgen, während eine Anpassung an die Sitzlängseinstellung LV oder bei einer manuellen Einstellung aus Gründen der Positioniergenauigkeit langsam erfolgen kann. Günstig in diesem Zusammenhang ist die Option, daß in der Elektronikeinheit ein Softstop-Programm abgelegt ist, um laute Anschlaggeräusche zu vermeiden bzw. zu reduzieren und um die Verstelleinrichtung zu schonen.

Vorteilhafterweise ist die Elektronikeinheit mit einer Sitzbelegungserkennung gekoppelt, wodurch eine Verstellung nur an den Sitzplätzen erfolgt, die tatsächlich belegt sind.

Es hat sich als günstig erwiesen, daß die Elektronikeinheit auf der Basis von Leistungshalbleitern aufgebaut ist.

Anhand der in der Figuren der Zeichnung dargestellten Ausführungsbeispiele, soll der der Erfindung zugrundeliegende Gedanke näher erläutert werden. Es zeigen:
Figur 1 - eine schematische Ansicht einer Sitzlehne mit einer Kopfstütze und
Figur 2 - einen schematischer Anschlußplan der Elektronikeinheit.

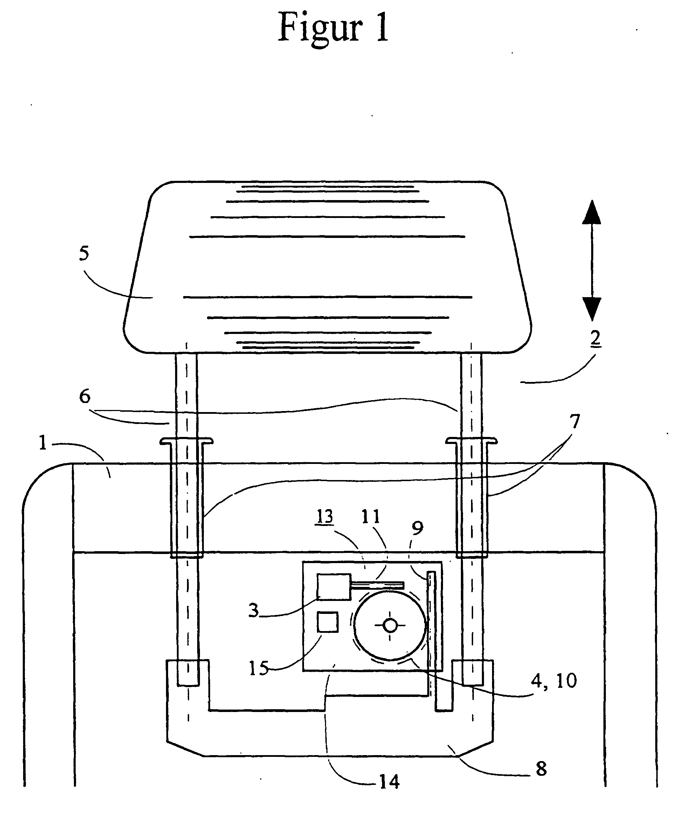

Die schematische Schnittdarstellung in Figur 1 zeigt eine Sitzlehne 1 mit einer Kopfstütze 2, die über einen Elektromotor 3 und einem Getriebe 4 in der Höhe verstellbar ist. Die Kopfstütze 2 besteht aus einem Kopfstützenkörper 5 und zwei parallelen Führungsstangen 6, die in Führungshülsen 7 längsverschieblich geführt sind. Die Führungshülsen 7 sind im oberen Teil der Sitzlehne 1 eingelassen.

Die Führungsstangen 6 sind an ihren unteren Enden mit einer Brücke 8 befestigt und darüber miteinander verbunden. An der Brücke 8 ist eine Zahnstange 9 angeformt, die ein Schneckenrad 10 kämmt, das über eine Schnecke 11 von einem Motor 3 angetrieben wird. Das Schneckenrad 10 fungiert dabei als ein Getriebe 4. Sowohl das Getriebe 4 als auch der Motor 3 sind zu einer Verstellvorrichtung 13, beispielsweise auf einem Trägerelement 14, zusammengefaßt und ortsfest in der Sitzlehne 1 befestigt. In einer teilelektrischen Ausgestaltung der Kopfstützenverstellung kann durch geeignete Betätigungsmittel, die nicht dargestellt sind, der Motor 12 in beide Drehrichtungen der Schnecke 11 und damit über das Getriebe 4 und die Zahnstange 9 auch die Kopfstütze 2 in Pfeilrichtung nach oben oder unten verfahren werden.

Ebenfalls in die Verstellvorrichtung 13 integriert ist eine Elektronikeinheit 15, die mit dem Motor 3 verbunden ist und in Abhängigkeit von sensierten Parametern entsprechende Steuerbefehle an den Motor 3 sendet. Die nicht dargestellten Sensoren erfassen Parameter von Verstelleinrichtungen, die in Abhängigkeit von der Körpergröße des Sitznutzers verändert werden. Eine niedrige Position der Sitzkissenhöhe läßt beispielsweise darauf schließen, daß sich ein relativ langer Passagier auf dem Sitz befindet. Solcherart ermittelte Daten werden der Elektronikeinheit 15 zugeleitet, die aufgrund dieser Signale die optimale Position der Kopfstütze 2 ermittelt und den Elektromotor 3 entsprechend ansteuert.

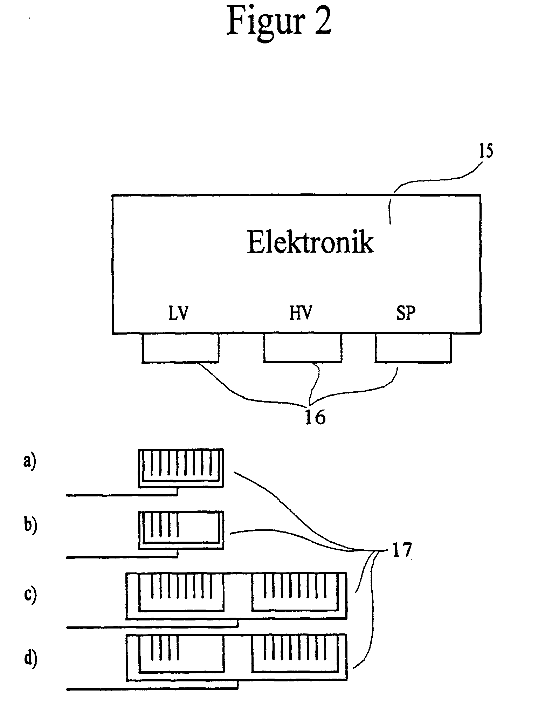

In der Figur 2 ist eine Elektronikeinheit 15 dargestellt, an der beispielhaft gezeigt wird, wie das plug-and-play-Prinzip im Rahmen der automatischen Kopfstützenverstellung eingesetzt wird. An der Elektronikeinheit sind Anschlußplätze 16 für alle Sensoreinrichtungen bzw. Verstelleinrichtungen vorgesehen, aus deren Position sich Rückschlüsse auf die Lage des Kopfes ziehen lassen. Die Elektronikeinheit ist somit für eine Maximalausstattung vorbereitet. Die drei Anschlußmöglichkeiten 16 an der Elektronikeinheit 15 stehen beispielhaft für eine Sitzlängsverstellung LV, Sitzhöhenverstellung HV und eine Spiegelverstellung SP.

Je nach Ausstattungsvariante sind im Fahrzeug unterschiedliche Verstelleinrichtungen vorhanden, die entweder manuell oder elektromotorisch betätigt werden. Entsprechend der Ausstattung werden an der Elektronikeinheit 15 die Stecker 17 mit den Anschlußplätzen 16 kontaktiert. In der Variante a) weist das Fahrzeug eine elektrische Sitzlängsverstellung LV auf, jedoch keine Sitzhöhenverstellung HV oder eine elektrischen Spiegelverstellung SP. Entsprechend der Steckerbelegung erkennt die Elektronikeinheit 15 den Anschluß als Sitzlängsverstellung LV und steuert den Elektromotor 3 entsprechend der ermittelten Sitzposition an.

In der Variante b) erfolgt die Verstellung des Sitzes in Längsrichtung manuell und die Position des Sitzes wird über mitgeführte Sensoren, beispielsweise über Drehpotentiometer oder optische Sensoren, ermittelt. Analog zu der Variante a) findet eine Einstellung der Kopfstütze 2 in Abhängigkeit von der sensierten Sitzposition statt.

In der Variante c) ist eine elektrische Sitzlängsverstellung LV und eine elektrische Sitzhöhenverstellung HV vorhanden, so daß anhand von zwei ermittelten Parametern die Position der Kopfstütze 2 angefahren werden kann. Variante d) zeigt eine manuelle Sitzlängsverstellung LV und eine elektrische Sitzhöhenverstellung HV als ein Beispiel, daß verschiedene Arten von sensierten Parametern in der Elektronikeinheit 15 verarbeitet werden können.

Über die obenbeschriebenen Varianten a) bis d) hinaus sind eine Vielzahl weiterer Kombinationen sensierter Parameter denkbar. Als mögliche Größen können die Lenksäulenneigung, die Lenksäulenlänge, durch Kameras oder andere optische Sensoren ermittelte Daten, Positionserkennung über Ultraschall und andere Sensoren oder von der Körpergröße abhängige Parameter von Einrichtungen im oder am Fahrzeug genutzt werden. Grundsätzlich lassen sich die sensierten Parameter danach einteilen, ob die Stellung bzw. die Position des Kopfes gemessen oder abgeleitet wird, beispielsweise über die Spiegelverstellung SP oder über Ultraschall oder optische Sensoren, oder ob Parameter gemessen werden, die in Abhängigkeit zu der Körpergröße des Sitznutzers stehen, beispielsweise die Sitzlängseinstellung LV. Aus diesen Daten wird in der Elektronikeinheit 15 die optimale Einstellung der Kopfstütze ermittelt.

Eine weitere Möglichkeit der Umsetzung von sensierten Parametern besteht in der Verstellung der Kopfstütze 2 aufgrund der Auswertung von Sitzbelegungserkennungssytemen. Für den Fall, daß ein oder mehrere Sitzplätze in einem Fahrzeug nicht belegt sind, können die jeweils dazugehörigen Kopfstützen 2 in die untere Position verfahren werden, damit dem Fahrer eine bessere Rundumsicht zur Verfügung steht.

Mit Vorteil ist die Elektronikeinheit 15 im Rahmen der Endmontage programmierbar, da auf diese Art und Weise eine unmittelbare Zuordnung zu dem jeweiligen Fahrzeugtyp hergestellt werden kann. Weiterhin kann in die Elektronikeinheit 15 eine Thermoschutzfunktion als Überlastungssicherung des Motors integriert werden. Dadurch wird verhindert, daß der Motor durchbrennt oder daß die Sitzlehne verschmort bzw. Feuer fängt.

Die Elektronikeinheit 15 kann zudem dafür genutzt werden, daß eine gleichbleibende Verstellgeschwindigkeit verschiedener Verstelleinrichtungen auch bei sich verändernden äußeren Bedingungen, beispielsweise Verschleiß bei der Sitzhöhenverstellung oder Kälte bei Fensterhebern, gewährleistet ist. Dadurch wird die akustische Beeinträchtigung, die durch das Modulieren des Antriebes hervorgerufen wird, verhindert.

Für einige Einsatzzwecke ist eine Verstellung mit maximaler Geschwindigkeit notwendig, beispielsweise bei dem Verstellen der Kopfstütze 2 beim Vorklappen des Sitzes bzw. der Sitzlehne 1. Hierbei kommt es insbesondere darauf an, daß bei dem Anfahren der unteren Position eine möglichst schnelle Verstellung erfolgt. Zur Schonung der mechanischen Komponenten sowie zur Reduzierung der Geräuschbelastung ist ein Softstop-Programm in der Elektronikeinheit 15 abgelegt, mit dem ein Abgleich der Ist-Position, die beispielsweise durch einen nicht dargestellten Hall-Sensor ermittelt wird, mit der Soll-Position der Kopfstütze 2 durchgeführt und bei einer Annäherung an die Soll-Position die Verstellgeschwindigkeit reduziert wird.

Eine ähnliche Anwendung liegt bei dem Wiederanfahren der Ausgangsposition vor. Durch das Soft-Stop-Programm wird ein möglichst exaktes Anfahren der Kopfstütze 2 an die gewünschte Position ermöglicht.

Neben sicherheitstechnischen Aspekten können über die integrierte Elektronikeinheit 15 fahrzeugspezifische Verstellgrößen wie z.B. der Verstellhub oder die Verstellkraft unabhängig von der Konfiguration der Kopfstütze 2 eingestellt werden. Bei einem Sportwagen mit geringer Kopffreiheit wird der maximale Verstellhub mittels der Elektronikeinheit 15 begrenzt, ohne daß Veränderungen an den Führungsstangen 6 oder den Führungshülsen 7 notwendig sind. Mit der Elektronikeinheit 15 ist es also möglich, eine Einheitskopfstütze herzustellen, die im Rahmen der Endmontage typenspezifisch programmiert werden kann und mit der durch Reduzierung der Teilevielfalt Einsparungseffekte erzielt werden können.

Insbesondere bereits teilelektrisch ausgeführte Fahrzeugsitze lassen sich mit der Elektronikeinheit 15 problemlos nachrüsten und so sicherheitstechnisch modifizieren. Aber auch nichtelektrisch ausgeführte Sitz können einfach auf eine automatische Verstellung umgerüstet werden, da durch die sitzbezogene Steuerung keine steuerungstechnischen Voraussetzungen seitens des Fahrzeuges vorhanden sein müssen und alle benötigten Bauteile in der Verstellvorrichtung 13 zusammengefaßt sind. Lediglich die Anschlüsse an das Spannungsnetz und an die Sensorik müssen für die Funktionsfähigkeit der Kopfstützenverstellung realisiert werden.

Es ist selbstverständlich, daß neben der automatischen Kopfstützeneinstellung eine separate Einstellung der Kopfstütze über Schalter oder mittels manueller Verstellung erfolgen kann.

### Bezugszeichenliste:

- 1 -: Sitzlehne
- 2 -: Kopfstütze
- 3 -: Elektromotor
- 4 -: Getriebe
- 5 -: Kopfstützenkörper
- 6 -: Führungsstange
- 7 -: Führungshülse
- 8 -: Brücke
- 9 -: Zahnstange
- 10 -: Schneckenrad
- 11 -: Schnecke
- 13 -: Verstellvorrichtung
- 14 -: Trägerelement
- 15 -: Elektronikeinheit
- 16 -: Anschlußplätze
- 17 -: Stecker
- LV-: Sitzlängsverstellung
- HV-: Sitzhöhenverstellung
- SP-: Spiegelverstellung

## Patentansprüche

1. Einstellbarer Kraftfahrzeugsitz mit
a) einer Sitzlängsverstellung und/oder einer Sitzhöhenverstellung und/oder einer Sitzkissentiefenverstellung und/oder einer Sitzlehnenverstellung,
b) einer elektromotorisch einstellbaren Kopfstütze (2), die in Abhängigkeit von Signalen wenigstens einer durch die Körpergröße eines Sitzbenutzers beeinflußten Sensorik angesteuert wird, wobei mittels der Sensorik Parameter mindestens einer Verstelleinrichtung. erfasst werden, die in Abhängigkeit von der Körpergröße des Sitzbenutzers einstellbar ist,
c) einem Motor (3), der mit einem Getriebe (4) zu einer Verstellvorrichtung (13) für die Kopfstütze (2) zusammengefaßt ist, sowie
d) einer Elektronikeinheit (15), die die Sensorsignale der Sensorik bewertet und die Kopfstützeneinstellung steuert, wobei die Elektronikeinheit (15) am Fahrzeugsitz angeordnet ist, dort in die Verstellvorrichtung (13) für die Kopfstütze (2) integriert ist und mit dem Motor (3) über ein tragendes Element (14) mechanisch verbunden ist.

2. Einstellbarer Kraftfahrzeugsitz nach Anspruch 1, **dadurch gekennzeichnet, daß** die Blektronikeinheit (15) zur Steuerung sämtlicher zu steuernder Sitzverstelleinrichtungen vorgesehen ist, d.h., daß der Sitz keine weitere Elektronikeinheit (15) aufweist.

3. Einstellbarer Kraftfahrzeugsitz nach Anspruch 1 und 2, **dadurch gekennzeichnet, daß** die Elektronikeinheit (15) für eine maximal vorgesehene Anzahl von Funktionen ausgerüstet ist und nach ihrem Anschluß an die entsprechenden Verstelleinrichtungen die zugeordneten Funktionen aktiviert.

4. Einstellbarer Kraftfahrzeugsitz nach einem der voranstehenden Ansprüche, **dadurch gekennzeichnet, daß** die Sensorik Bestandteil einer elektromotorisch verstellbaren Sitzverstelleinrichtung ist.

5. Einstellbarer Kraftfahrzeugsitz nach einem der Ansprüche 1 bis 3, **dadurch gekennzeichnet, daß** die Sensorik Bestandteil einer manuell verstellbaren Sitzverstelleinrichtung ist.

6. Einstellbarer Kraftfahrzeugsitz nach einem der voranstehenden Anaprüche, **dadurch gekennzeichnet, daß** die Kopfstütze (2) in Abhängigkeit von mehreren, als führende Verstelleinrichtungen definierten Verstelleinrichtungen verstellbar ist.

7. Einstellbarer Kraftfahrzeugsitz nach Anspruch 6, **dadurch gekennzeichnet, daß** als führende Verstelleinrichtungen Sitzverstelleinrichtungen, insbesondere die Sitzlängsverstellung (LV) und/oder die Sitzhöhenverstellung (HV), vorgesehen sind.

8. Einstellbarer Kraftfahrzeugsitz nach Anspruch 6, **dadurch gekennzeichnet, daß** als führende Verstelleinrichtungen die Spiegelverstellung (SP) und/oder die Gurtpunkt-Höhenverstellung und/oder die Lenkradverstellung oder ein die Lage des Kopfes erkennenden Sensor vorgesehen sind.

9. Einstellbarer Kraftfahrzeugsitz nach einem der voranstehenden Ansprüche, **dadurch gekennzeichnet, daß** die Elektronikeinheit (15) für mindestens zwei Verstellgeschwindigkeiten für die Kopfstütze (2) vorgesehen ist, wobei die höhere Geschwindigkeit dem vollständigen Absenken und die niedrigere Geschwindigkeit dem Einstellen der Kopfstütze (2) dient.

10. Einstellbarer Kraftfahrzeugsitz nach Anspruch 9, **dadurch gekennzeichnet, daß** die Elektronikeinheit (15) die Kopfstütze (2) eines vorklappbaren Sitzes oder einer Sitzlehne (1) mit der maximal zur Verfügung stehenden Geschwindigkeit nach unten fährt, wenn dieser vorgeklappt wird, und daß die Kopfstütze (2) nach dem Zurückklappen des Sitzes in die ursprüngliche Position verfahren wird.

11. Einstellbarer Kraftfahrzeugsitz nach Anspruch 9 und 10, **dadurch gekennzeichnet, daß** die Elektronikeinheit (15) mit einem Softstop-Anlaufprogramm, das beim schnellen Absenken der Kopfstütze (2) Anschlaggeräusche eliminiert bzw. reduziert, versehen ist.

12. Einstellbarer Kraftfahrzeugsitz nach einem der voranstehenden Ansprüche, **dadurch gekennzeichnet, daß** die Elektronikeinheit (15) auf der Basis von Leistungshalbleitern aufgebaut ist.

13. Einstellbarer Kraftfahrzeugsitz nach einem der voranstehenden Ansprüche, **dadurch gekennzeichnet, daß** die Elektronikeinheit (15) mit einer Sitzbelegungserkennung gekoppelt ist.

## Claims

1. Adjustable motor vehicle seat with
a) a horizontal seat adjustment and/or seat height adjustment and/or seat depth adjustment and/or seat back incline adjustment
b) a head rest (2) which can be adjusted by electric motor and which is controlled in dependence on signals of at least one sensor unit which is influenced by the size of the user, wherein parameters of at least one adjustment device which is adjustable in dependence on the body size of the seat user are detected by means of the sensor unit
c) a motor (3) which is combined with a gearing (4) into an adjustment device (13) for the head rest (2), as well as
d) an electronics unit (15) which evaluates the sensor signals of the sensor unit and controls the head rest adjustment, wherein the electronics unit (15) is mounted on the vehicle seat, is integrated there into the adjustment device (13) for the head rest (2) and is connected mechanically to the motor (3) through a supporting element (14).

2. Adjustable motor vehicle seat according to claim 1 **characterised in that** the electronics unit (15) is provided for controlling all the seat adjustment devices which are to be controlled, i.e. that the seat has no further electronics unit (15).

3. Adjustable motor vehicle seat according to claims 1 and 2 **characterised in that** the electronics unit (15) is equipped for a maximum number of functions and activates the assigned functions after its connection to the corresponding adjustment devices.

4. Adjustable motor vehicle seat according to one of the preceding claims **characterised in that** the sensor unit is a constituent part of a seat adjustment device which can be adjusted by electric motor.

5. Adjustable motor vehicle seat according to one of claims 1 to 3 **characterised in that** the sensor unit is a constituent part of a manually adjustable seat adjustment device.

6. Adjustable motor vehicle seat according to one of the preceding claims **characterised in that** the head rest (2) is adjustable in dependence on several adjustment devices defined as controlling adjustment devices.

7. Adjustable motor vehicle seat according to claim 6 **characterised in that** as controlling adjustment devices are used seat adjustment devices, more particularly the horizontal seat adjustment (LV) and/or the seat height adjustment (HV).

8. Adjustable motor vehicle seat according to claim 6 **characterised in that** as controlling adjustment devices are used the mirror adjustment (SP) and/ or the height adjustment of the seat belt point and/or the steering wheel adjustment or a sensor detecting the position of the head.

9. Adjustable motor vehicle seat according to one of the preceding claims **characterised in that** the electronics unit (15) is provided for at least two adjustment speeds for the head rest (2) wherein the higher speed serves for lowering the head rest (2) completely and the lower speed serves for adjusting the head rest (2).

10. Adjustable motor vehicle seat according to claim 9 **characterised in that** the electronics unit (15) moves the head rest (2) of a forward-folding seat or seat back (1) down at the maximum available speed when the seat or seat back is folded forwards, and that the head rest (2) is moved back into the original position when the seat is folded back.

11. Adjustable motor vehicle seat according to claim 9 and 10 **characterised in that** the electronics unit (15) is provided with a soft stop approach program which eliminates or reduces stopping or impact noises when the head rest (2) is rapidly lowered.

12. Adjustable motor vehicle seat according to one of the preceding claims **characterised in that** the electronics unit (15) is constructed on the basis of power semiconductors.

13. Adjustable motor vehicle seat according to one of the preceding claims **characterised in that** the electronics unit (15) is coupled to a seat occupancy detection system.

## Revendications

1. Siège réglable de véhicule automobile, comprenant
a) un réglage de la longueur du siège et/ou un réglage de la hauteur du siège et/ou un réglage de la profondeur de l'assise et/ou un réglage du dossier,
b) un repose-tête (2) réglable par moteur électrique et activé en fonction de signaux provenant d'au moins un système de détection influencé par la taille d'un utilisateur du siège, ledit système de détection détectant des paramètres d'au moins un système de réglage pouvant être ajusté en fonction de la taille de l'utilisateur du siège,
c) un moteur (3), regroupé avec une transmission (4) pour constituer un dispositif de réglage (13) affecté au repose-tête (2), et
d) une unité électronique (15) qui interprète les signaux de détection du système de détection, et qui commande le réglage du repose-tête, l'unité électronique (15) étant placée sur le siège de véhicule, sur lequel elle est intégrée dans le dispositif de réglage (13) affecté au repose-tête (2), et est reliée mécaniquement au moteur (3) par l'intermédiaire d'un élément de support (14).

2. Siège réglable de véhicule automobile, selon la revendication 1, **caractérisé par le fait que** l'unité électronique (15) est prévue pour piloter la totalité des systèmes de réglage du siège, devant être commandés, c'est-à-dire que ledit siège ne présente aucune autre unité électronique (15).

3. Siège réglable de véhicule automobile, selon les revendications 1 et 2, **caractérisé par le fait que** l'unité électronique (15) est équipée pour accomplir un nombre de fonctions prévu selon un maximum, et active les fonctions associées après qu'elle a été connectée aux systèmes de réglage correspondants.

4. Siège réglable de véhicule automobile, selon l'une des revendications précédentes, **caractérisé par le fait que** le système de détection fait partie intégrante d'un système de réglage du siège, ajustable par moteur électrique.

5. Siège réglable de véhicule automobile, selon l'une des revendications 1 à 3, **caractérisé par le fait que** le système de détection fait partie intégrante d'un système de réglage du siège, ajustable manuellement.

6. Siège réglable de véhicule automobile, selon l'une des revendications précédentes, **caractérisé par le fait que** le repose-tête (2) peut être ajusté en fonction de plusieurs systèmes de réglage définis comme des systèmes de réglage à effet de guidage.

7. Siège réglable de véhicule automobile, selon la revendication 6, **caractérisé par le fait que** des systèmes de réglage du siège, en particulier le réglage (LV) de la longueur du siège et/ou le réglage (HV) de la hauteur dudit siège, sont prévus en tant que systèmes de réglage à effet de guidage.

8. Siège réglable de véhicule automobile, selon la revendication 6, **caractérisé par le fait que** le réglage (SP) du rétroviseur et/ou le réglage de la hauteur du point d'ancrage de la ceinture et/ou le réglage du volant de direction, ou un capteur détectant la position de la tête, sont prévus en tant que systèmes de réglage à effet de guidage.

9. Siège réglable de véhicule automobile, selon l'une des revendications précédentes, **caractérisé par le fait que** l'unité électronique (15) est prévue pour au moins deux vitesses de réglage associées au repose-tête (2), la vitesse supérieure servant à l'abaissement intégral et la vitesse inférieure servant à l'ajustement dudit repose-tête (2).

10. Siège réglable de véhicule automobile, selon la revendication 9, **caractérisé par le fait que** l'unité électronique (15) fait descendre le repose-tête (2) d'un siège rabattable ou d'un dossier (1), avec la vitesse disponible au maximum, lorsque ce dernier est rabattu ; et **par le fait que** le repose-tête (2) est déplacé jusqu'à la position initiale après le pivotement rétrograde du siège.

11. Siège réglable de véhicule automobile, selon les revendications 9 et 10, **caractérisé par le fait que** l'unité électronique (15) est dotée d'un programme d'initialisation à arrêt en douceur, ayant respectivement pour effet d'éliminer ou de réduire des bruits d'impact lors de l'abaissement rapide du repose-tête (2).

12. Siège réglable de véhicule automobile, selon l'une des revendications précédentes, **caractérisé par le fait que** l'unité électronique (15) est structurée sur la base de semi-conducteurs de puissance.

13. Siège réglable de véhicule automobile, selon l'une des revendications précédentes, **caractérisé par le fait que** l'unité électronique (15) est couplée à un système de repérage d'occupation du siège.
